# EUROPEAN PATENT APPLICATION

(11) **EP 4 700 676 A1**
(43) Date of publication of application: **25.02.2026**
(21) Application number: 24196229.9
(22) Date of filing: 23.08.2024
(51) Int. Cl.: G06Q 10/107, G06Q 10/109, H04L 12/18

(54) **METHOD AND SYSTEM FOR INDICATING AND INCREASING THE PROBABILITY OF INVITED USERS TO JOIN A REMOTE MEETING**

(71) Applicant: Unify Beteiligungsverwaltung GmbH & Co. KG, 81739 München (DE)
(72) Inventor: Klaghofer, Karl, 81373 München (DE)
(74) Representative: Schaafhausen, Anne

(57) **Abstract**

The invention relates to a method and a system for calculating for each invited user of a remote meeting a Probability of Joining (POJ) value. The POJ values of the individual invited users may indicate to the inviting meeting host the probability of the respective user to attend the meeting. According to the calculated POJ values, the POJ Application may take further actions for increasing the user's POJ values such as triggering automated user reminders, replacement user invites and/or meeting rescheduling in order to enable more productive remote meetings.

## Description

### Description

The present invention relates to a method for indicating and increasing the probability of invited users to join a remote meeting and a system for performing the method.

In the modern world, people and colleagues are increasingly busy and overloaded. When people are invited to remote electronic meetings, they often do not even react to the invitation or do not attend the meeting after all although they accepted the invitation. Thus, even if the user answers, these answers are often not reliable. Therefore, planning remote meetings is difficult and often annoying for the host and also the attending participants. Invited people often wait until the last second before the meeting whether to join or not, often without an answer to the meeting invitation.

In the prior art, the host may repeatedly ask the invited users in terms of a reminder via e-mail, text message, voice call or by any other means, to get a better insight of which users are attending. This is on the one hand time consuming for the host, but on the other hand, it may well be that the host reminds those users, who anyway would have attended, which is annoying to them. Further, systems such as MS Outlook have reminder functions with a pop-up window appearing from, for example, 2 weeks until 5 minutes before the scheduled meeting. However, the host still does not know whether or not the invited users will join. The pop-up window often is either ignored (intentionally) or overlooked (unintentionally). As a result, the overall user experience for both the host and invited users is low.

This problem is known from all kinds of horizontal meetings, known from daily business in the office world, as well as from vertical remote meetings, also known as E-Consultation Appointments. In the vertical sector, businesses need to organize hundreds or thousands of remote meetings, for example E-Consultation Meeting Appointments in healthcare or eldercare, where an office staff or a nurse care giver needs to organize video meetings with all the necessary participants such as patients, doctor practitioners, expert doctors, nurses and family members.

In summary, in many cases, the meeting host has no idea who will actually attend the meeting and who will definitely not attend. This leads to meetings being started without the necessary users attending, which results in less productive meetings, frustrated joining participants and waste of joining user's time.

Thus, there is a need in the art for a more reliable remote meeting planning with an improved meeting host user experience, wherein the host knows before the meeting, who of the invited users will join, and whose participation is still in doubt. This would enable the host to trigger actions such as sending reminders to users in question, inviting other users instead of the users in question, and/or rescheduling the meeting.

Therefore, the present invention is based on the object of providing a method for indicating and increasing the probability of invited users to join a remote meeting, and a corresponding system.

This object is solved by a method having the features according to claim 1 and a system having the features of claim 10.

Preferred embodiments of the invention are defined in the respective dependent claims.

The present invention provides a method and a system for calculating for each invited user a Probability of Joining (POJ) value in %. The POJ values of the individual invited users may indicate to the inviting meeting host the probability of the respective user to attend the meeting. According to the calculated POJ values, the host may take further actions for increasing the user's POJ values such as triggering automated user reminders, replacement user invites and/or meeting rescheduling in order to enable more productive remote meetings.

According to the invention, a method for indicating and increasing the probability of an invited user to join a remote meeting is provided, the method comprising the steps of: inviting, by a meeting host, one or more users to a remote meeting; reacting, by the invited user(s), to the invitation of the host; collecting and analyzing, by a data collection element, one or more data sources; calculating, by a data interpretation element, a probability of joining (POJ) value for the one or more data sources; aggregating, by a data aggregation element, the POJ values for the one or more data sources of each invited user; forwarding, by a data output element, the aggregated POJ values of each invited user to the host; checking, by a virtual agent, whether a minimum POJ value is met by the aggregated POJ values of each invited user; reminding, by the host or a reminder element, invited user(s), in case the aggregated POJ value for the respective user(s) is/are below the minimum POJ value; checking, by the virtual agent, whether the minimum POJ value is met by the aggregated POJ values of the reminded user(s); initiating, by the virtual agent, automated actions, in case the aggregated POJ value(s) of the reminded user(s) is/are still below the minimum POJ value(s) after the reminder; ending the method.

According to a preferred embodiment, the invited users react by accepting, tentatively accepting or rejecting the invitation, or by not answering to the invitation.

According to another preferred embodiment, the data sources are selected from calendar, text communication channels, voice communication channels, real-time analytics of previous or subsequent user meetings, meeting series, meeting subject, user profile and/or user behavior or pattern.

According to yet another preferred embodiment, the steps of calculating and aggregating the POJ values are performed continuously or periodically.

Further, according to a preferred embodiment, the continuous performing of calculating and aggregating the POJ values comprises continuously monitoring, by the data collection element, data sources of the invited user(s) for relevant updates that contribute to his/her aggregated POJ value for the remote meeting.

According to yet another preferred embodiment, the periodic performing of calculating and aggregating the POJ values comprises periodic updates which increase the closer the meeting date comes.

According to another preferred embodiment, the frequency of updates is configurable.

According to yet another preferred embodiment, the automated actions are selected from sending reminders, inviting replacement user(s) and/or rescheduling the meeting.

According to still another preferred embodiment, the minimum POJ value is selected from a minimum POJ value for each invited user individually, an average minimum POJ value for all invited users and/or a minimum POJ value for a given meeting type and/or given user roles.

According to the invention, a system for indicating the probability of invited users to join a remote meeting is provided, wherein the system is configured to perform the method according to the invention.

According to a preferred embodiment, the system comprises a POJ application, a calendar application component and a real time communications (RTC) system.

According to still another preferred embodiment, the POJ application comprises a meeting policies element, a virtual agent, a data collection element, a data aggregation element, a users' status element, a reminder element, a data interpretation element, a data output element, a POJ graphical user interface (GUI) element, and a rescheduler element.

According to a further preferred embodiment, the calendar component comprises a POJ GUI element.

According to another preferred embodiment, the RTC system allows for horizontal remote meetings and/or for vertical E-Consultation meeting systems and comprises all communication and collaboration tools.

The present invention allows for a more reliable horizontal and/or vertical remote meeting planning, with an improved meeting host user experience. It does so by providing a method by which the probability of a user to join an invited meeting may be calculated for every invited user by leveraging data analytics from different data sources. The calculated POJ values from different single data sources may get aggregated to give an aggregated POJ value, which may then be indicated to the inviting meeting host's calendar POJ GUI. These values may enable the meeting host to get increased insights of the probability of users to join the meeting. Also, this allows the virtual agent to automatically trigger actions to remind user(s) or otherwise engage with users who have a poor POJ value to increase their probability of joining, again leveraging data analytics of user's responses and data sources.

Accordingly, the virtual agent may continue with the automated actions until a given minimum POJ value for the respective meeting type and/or user roles and/or of the individual invited user(s) and/or a minimum average POJ value of all invited users is reached in order to become a productive meeting. If, in spite of such actions, the minimum POJ value(s) cannot be reached, the virtual agent may either invite replacement users (e.g. for a given role) or reschedule the meeting.

In the meaning of the present invention, the minimum POJ value is set based on user preferences and is configurable. Thus, depending on the remote meeting to be held, it may be important to set the minimum POJ value for user roles, for example in a healthcare environment, where the participation of a doctor is important for a successful meeting. Another example is a remote meeting in a company where the minimum POJ value may be set for a minimum average POJ value across all mandatory invited participants.

Thus, the invention also contributes to increasing the probability of users joining remote meetings. Further, the invention contributes to saving money by more efficiently planned remote meetings.

In the meaning of the present invention, a remote electronic meeting is a meeting where participants communicate and collaborate from different physical locations through digital or telecommunication means rather than meeting face-to-face at a single location. From an industry perspective, remote communications are divided into vertical or horizontal remote communications. Horizontal remote communications refer to interactions and information exchanges between individuals of teams, not specific to a vertical industry sector. Examples include team meetings, interdepartmental collaborations, management meetings and discussions among colleagues, also known as *Knowledge Workers.* Vertical remote communications involve interactions between individuals or groups in specific industries, such as healthcare/eEldercare, finance or public sector. For example, in healthcare, telehealth E-Consultation remote meetings are used among doctor, patient and eventually a nurse, as an alternative for the patient to physically visit the doctor (also known as *Frontline Workers).*

In the meaning of the present invention, a POJ value is a number or a number range in % reflecting a user's probability of joining a given meeting to which he/she is invited.

In the meaning of the present invention, the term "aggregated POJ value" depicts the aggregated POJ value calculated based on one or more individual POJ values which are in turn calculated based on different individual data sources.

In the meaning of the present invention, the aggregated POJ value for each invited user is indicated to the meeting host's POJ GUI.

In the meaning of the present invention, the term "groupware application" refers to a type of software designed to facilitate collaboration and communication among members of a group or team, often within a professional or organizational setting. These applications provide tools and features that support the sharing of information, coordination of activities, and joint work on projects or tasks. Key functionalities typically include document sharing, calendar management, task tracking, messaging, video conferencing, and collaborative editing. Examples of groupware include MS Outlook. In the meaning of the present invention, "groupware application" comprises e-mail, calendar etc, except real-time communications.

In the meaning of the present invention, the term "RTC system" refers to a technology framework that enables the immediate transmission of data, voice, or video between users or systems without noticeable delay. This type of communication is characterized by its low latency, meaning the data is sent and received almost instantaneously, allowing for real-time interaction. In the meaning of the present invention, the RTC system comprises real-time communications and collaboration tools other than those applications comprised by the term "groupware application". For example, OpenScape, MiVoice, MS Teams etc.

In the meaning of the present invention, the term "microservices" refers to an architectural style for developing software applications that structures an application as a collection of small, autonomous services modeled around a business domain. Each microservice is a self-contained unit that implements a specific business functionality, can be developed, deployed, and scaled independently, and communicates with other services through well-defined Application Programming Interfaces (APIs), typically using lightweight protocols such as Hypertext Transfer Protocol/Representational State Transfer) (HTTP/REST), Remote procedure calls (gRPC), or messaging queues.

It has also to be noted that aspects of the invention have been described with reference to different subject-matters. In particular, some aspects or embodiments have been described with reference to method type claims whereas other aspects have been described with reference to system type claims. However, a person skilled in the art will gather from the above and the following description that, unless otherwise notified, in addition to any combination between features belonging to one type of subject-matter also any combination between features relating to different types of subject-matters is considered to be disclosed with this text. In particular combinations between features relating to the method type claims and features relating to the system type claims are considered to be disclosed. In addition, features relating to one of the embodiments may be combined with other features of another embodiment, the drawings or the claims, where possible. The invention and embodiments thereof will be described below in further detail in connection with the drawing(s).
- Fig. 1: shows a schematic illustration of a meeting host user experience according to the prior art.
- Fig. 2: shows a schematic illustration of a meeting host user experience according to an embodiment of the present invention.
- Fig. 3: shows a flowchart of the method for indicating the probability of invited users to join a remote meeting according to an embodiment of the present invention.
- Fig. 4: shows a flowchart of the method for indicating the probability of invited users to join a remote meeting according to another embodiment of the present invention.
- Fig. 5: shows a schematic illustration of the system architecture according to an embodiment of the present invention.
- Fig. 6: shows a schematic overview of the data sources according to another embodiment of the present invention.
- Fig. 7: shows a schematic illustration of data aggregation according to another embodiment of the present invention.

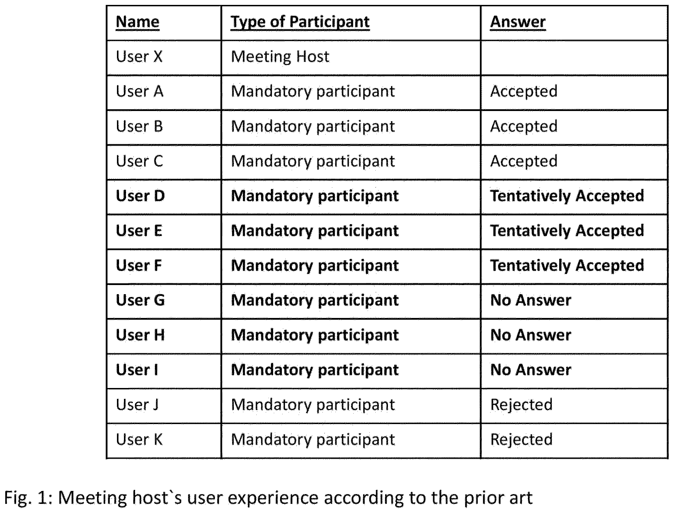

Fig. 1 schematically shows an illustration of a meeting host's user experience according to the prior art. The system illustrated in Fig. 1 is MS outlook. User X is the host who invites users A - K to a remote meeting. As can be seen from the figure, Users A, B and C do accept the invitation. Users D - F tentatively accept the invitation, Users J and K reject the invitation and Users G, H and I do not answer to the invitation. Thus, from those answers, the host, User X, is not able to know who is attending the meeting. The problem is that although the majority of the invited users answered, these answers are often not reliable. An "accepted" does not necessarily mean that the respective user will join. A "tentative accepted" does not tell anything to the meeting host. Similar for a "no answer", which does not mean that the user will not join. Invited people often wait until the last second before the meeting to join or not, often without an answer to the meeting host. Finally, the "rejected" answer is probably the most reliable answer, because the user who rejected the invitation may have a reason for rejecting the invitation.

Due to the answers as presented in Fig. 1, the host User X may assume that Users A - C will attend the meeting, Users J and K will not attend, and User D - I are uncertain. The host may manually send reminders to Users D - I to obtain any further answers concerning the attendance of the meeting, but there is still a good chance that the invited users will not change their answers from the initial invite or will not answer to the reminder at all.

Therefore, according to the prior art, the meeting host can only assume who of the invited users will attend the meeting. Thus, there is a good chance that people who would be necessary for a productive meeting are not going to attend, which leaves the attending people annoyed. Also, a lot of time may be wasted which could have been used more productively.

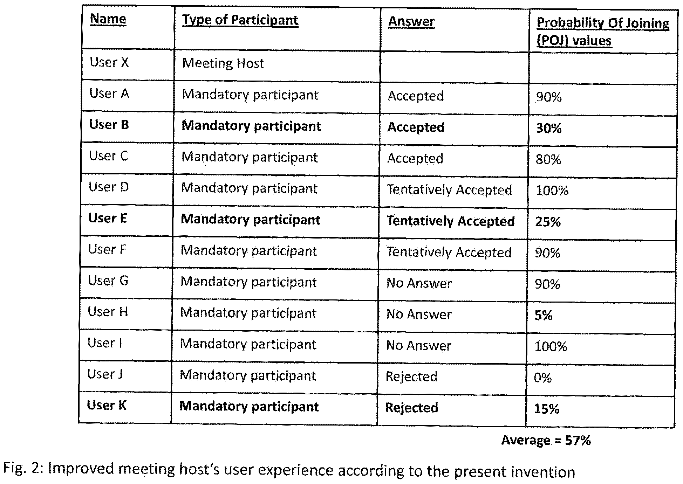

Fig. 2 schematically shows the improved meeting host user experience according to an embodiment of the present invention. Again, User X is the meeting host who invites Users A - K. As was already depicted in Fig. 1, Users A - C answer by accepting the invitation, Users D - F only tentatively accept the invitation, Users J and K reject the invitation and Users G, H, and I do not respond to the invitation. In the embodiment illustrated in Fig. 2, in the past, User A almost always joined the meeting, if he/she had accepted an invitation. Thus, according to the inventive method, a POJ value of 90% is calculated for User A. Contrary thereto, User B rarely joins any meetings even if he/she has accepted an invitation. Thus, the calculated POJ value is only 30%. User C usually joins if he/she accepted an invitation, but if there is a preceding meeting in his/her calendar, the joining probability decreases to 80%, although he/she accepted the invitation to the meeting.

User D, in spite of only tentatively accepting, always joins, which leads to a POJ value of 100%. User E is a user for whom tentatively accepting means a POJ value of 25%, as he/she only attends one out of four meetings for which a "tentatively accept" answer was sent. As for User F, he/she usually joins 50% of the meetings he/she answers with "tentatively accept". But in the present case, User X sent the invitation to the meeting, which increases the POJ of User F to 90%, because according to the analysis of the behavior or pattern of User F, after invitations by User X, User F almost always joins.

In the case of User G, even a "No Answer" means a 90% probability of joining according to the analysis of his/her data sources. In contrast, if User H does not answer, he/she usually will not attend, thus the POJ value for User H is calculated as 5%.

The behavior or pattern analysis of User I reveals that this user never accepts an invitation but always joins the meetings, especially for the subject meeting topic which is set by the host User X. Thus, the POJ value for User I is 100%.

User J rejected the invitation and never joins when rejected, thus, the POJ is calculated as 0%. There is no need to send a reminder because of his/her behavior or pattern. Finally, User K rejected but in 15% of such cases he/she still joins. Therefore, the POJ value is calculated as 15%.

As can be seen from Fig. 2, using the present invention, the meeting host knows whom of the invited users he/she needs to give a manual reminder or an automated system reminder. In the embodiment depicted in Fig. 2, a minimum POJ value between 10 and 75% is set for each user in the meeting policies, thus, users having an aggregated POJ value below 10% are managed as not participating and will not get any reminders. If these users are necessary for a productive meeting, replacement users will get invited. Users having an aggregated POJ value above 75% are managed as participating and thus will also not get any reminders. Only users who's aggregated POJ values fall between 10 and 75% will get a reminder. In Fig. 2, these are Users B, E and K.

After having sent the reminders to Users B, E and K, either manually by the host or automatically by a reminder element, the aggregated POJ value for each of the reminded users is calculated again. If the aggregated POJ value for the respective users still does not meet the meeting policies, automated actions may be initiated by the virtual agent, like inviting replacement participants or rescheduling the meeting.

Thus, according to the present invention, the meeting host has an improved user experience as he/she knows which of the invited users will attend the meeting, which of the invited users he/she may have to remind manually or automatically, and which of the invited users will not attend and may have to be replaced, or the meeting may have to be rescheduled all together. This allows the host to plan a productive meeting without anyone getting annoyed or wasting time.

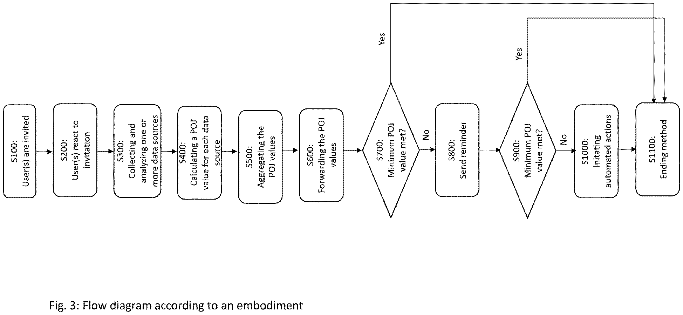

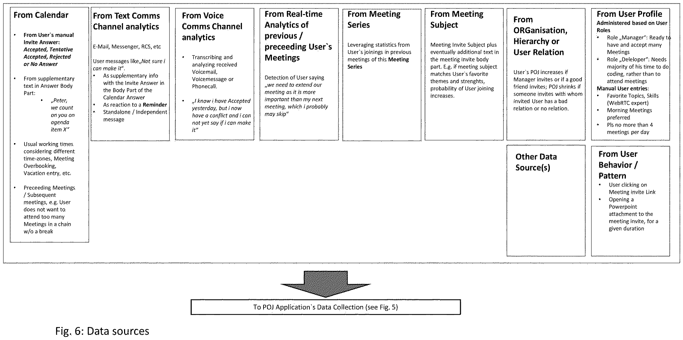

In Fig. 3, a flowchart of the method for indicating the probability of invited users to join a remote meeting according to an embodiment of the present invention is shown. In step S100, a meeting host may invite one or more users to join a remote meeting. The invited users may react to the invitation in step S200. These reactions may be an accepting answer, a tentatively accepting answer or a rejection of the invitation. There is also the possibility that user(s) do not react to the invitation at all. A data collection element may collect and analyze one or more data sources of each invited user in step S300. The different data sources are depicted and described in Fig. 6. After the collection and analyzation of the one or more data sources, the POJ value is calculated by a data interpretation element in step S400. This is done for each collected and analyzed data source. Thus, there may be more than one POJ value for each invited user. These POJ values are aggregated by a data aggregation element to an aggregated POJ value for each invited user (step S500). In step S600, these aggregated POJ values of each invited user are forwarded to the meeting host by a data output element. A virtual agent may check in the next step, S700, whether a minimum POJ value is met by the aggregated POJ value sent to the meeting host. The minimum POJ value may be configured for each meeting differently according to user preferences. Depending on the meeting, the minimum POJ value may be set for each invited user individually. Another possibility is to set the minimum POJ value as an average for all invited users. Furthermore, the minimum POJ value may be set for the different user roles or for the respective meeting type. In case the aggregated POJ value(s) of step S500 do not meet the minimum POJ value set for the meeting, the host himself/herself or a reminder element may remind the respective invited user(s). The reminder element is triggered by the virtual agent to send reminder(s) to those users which aggregated POJ values do not meet the minimum POJ value. In step S900, the virtual agent again checks whether the aggregated POJ value(s) of those user(s) which were send a reminder, do meet the minimum POJ value now. If this is the case, the method ends. If the minimum POJ value is still not met, the virtual agent triggers further automated actions in step S1000. These may be sending an invitation to a replacement user or rescheduling the meeting which is done by a rescheduling element. In step S1100, the method ends.

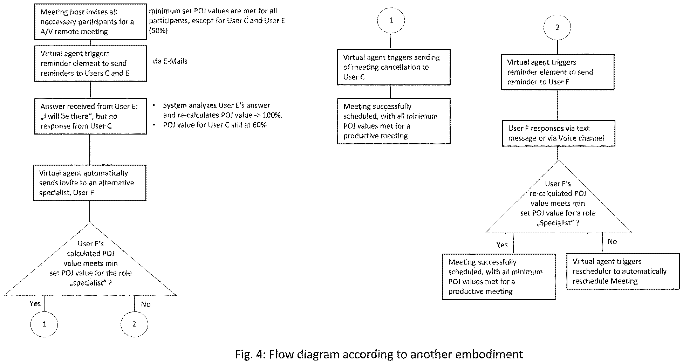

Figure 4 shows a flowchart of the method for indicating the probability of invited users to join a remote meeting according to another embodiment of the present invention. The flowchart illustrates an example for an E-consultation meeting appointment organized by an office personnel of an elderly care home.

In the example depicted in Fig. 4, the office personnel planning the remote audio/video meeting is the host. He/she invites a patient, User A, living in the elderly home, who's treatment plan is the topic of the meeting. Next to the patient, User A, also the elderly home's doctor, User B, is invited to the meeting, as well as a specialist, User C. Further, the nurse, User D, taking care of User A is invited. In addition, a family member of User A is also invited, being User E. In the meeting policies, minimum POJ values for each invited user are set. These values are set to guarantee the participation of the necessary users, or the invitation of replacement users or the rescheduling of the meeting, and thus, a productive meeting. The depicted minimum POJ values are for illustration only and are not meant to restrict the invention.

| | |
|---|---|
| User A (patient): | 100% |
| User B (the home's doctor): | 100% |
| User C (specialist): | 100% |
| User D (nurse): | 80% |
| User E (family member): | 90% |
| Host (office personnel): | 100% |

In the flowchart depicted in Fig. 4, a host invites all necessary participants of a remote meeting. These participants are Users A - E. The minimum POJ values for all users as depicted above are met, except for Users C and E. Thus, the reminder element of the inventive system may send a reminder to User C and to User E for example via e-mail. User E responds to the reminder with an e-mail saying that he/she will be at the meeting. Said answer is analyzed by the POJ application and the aggregated POJ value for User E is recalculated to 100%. Thus, also the minimum POJ value set in the meeting policies is met for User E now as well. Contrary to User E, User C does not answer to the reminder. Thus, the minimum POJ for User C as set in the meeting policies is still not met. The virtual agent therefore automatically sends a meeting invitation to a replacement user, being User F, another specialist. The POJ value of User F is calculated as well and compared to a minimum POJ value for the role "specialist" in the meeting policies. In case the POJ value for User F meets the meeting policies, the virtual agent triggers sending a meeting cancellation to User C. The meeting may be held as scheduled as all POJ values are within the meeting policy. Thus, the host is able to know beforehand that the meeting may be a productive meeting as all needed participants are going to attend the meeting.

In case the POJ value of User F does not meet the meeting policies, the virtual agent may trigger the reminder element to send a reminder to User F, this time for example in form of a voice message. User F may respond to the voice message for example via text message or voice channel. The response is analyzed and an updated POJ value for User F is calculated. Said recalculated POJ value is again compared to the meeting policies. If the minimum POJ value is met, the meeting may be held as scheduled with the host knowing that all needed participants are going to attend the meeting. If the minimum POJ value is again not met, the virtual agent may automatically reschedule the meeting.

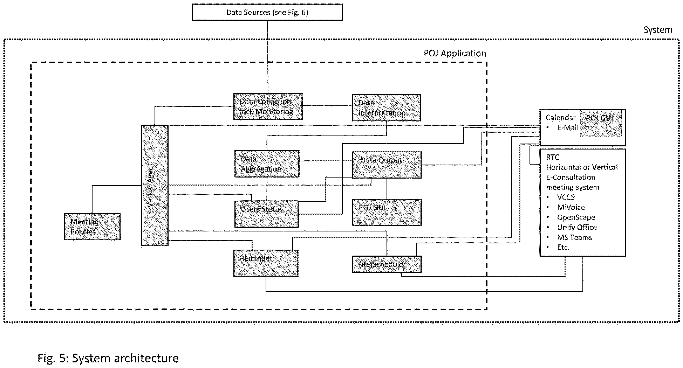

Fig. 5 shows a schematic illustration of the system architecture according to an embodiment of the invention. The inventive system comprises a POJ application, a calendar component and a RTC system.

The POJ application is the sum of all POJ software elements. It can be integrated with a RTC system (e.g. Mitel's Unify Office, OpenScape or MiVoice platforms) and with a calendar application component (e.g. MS Outlook groupware application). In case of an integrated vertical E-Consultation solution, the RTC system (functions such as conferencing, media server, etc.), the calendar application component (and workflow function) and the POJ application may also form an integrated system, e.g. microservices based.

Within the POJ application there are different elements comprised:
- data collection element collects contributing data from various data sources and has a data monitoring function. Further, it has interfaces to the different data sources and to the data interpretation element.
- data aggregation element aggregates POJ values received and calculated for different data sources, e.g. from a calendar application. It provides aggregated POJ values to the user status element and to the data output element.
- data interpretation element uses or contains a transcribing engine (for speech to text translation), interprets data received from the data collection element, leverages or contains either a language model (LM), a natural language processing (NLP) or a rules engine, calculates POJ values in % and provides data to the data aggregation element.
- user status element holds current aggregated POJ values from invited users for a given meeting received from the data aggregation element. Further, it has an interface to the calendar component for meeting and user data.
- data output element feeds user's aggregated POJ values received from the data aggregation element to meeting host's POJ GUI. It may also get triggered by the virtual agent to send aggregated POJ values to the meeting host's POJ GUI.
- POJ GUI element: User interface through which the meeting host sees the invited user's aggregated POJ values. This may either be a dedicated POJ application GUI or an extension of the calendar component. This element receives data from the data output element.
- meeting policies element may hold certain quality criteria configured for a given meeting type, user roles, average POJ value and/or individual invited user(s) to become a successful meeting. It may be configured through an administration GUI and may get accessed by the virtual agent.
- virtual agent may take automated actions, such as trying to increase the POJ value of invited participants by triggering reminders, reschedulings or other actions. This may be done by triggering sending reminders via the reminder element, by triggering sending invites for replacement users via the calendar component and/or by triggering rescheduling of the meeting via the reschedule element. The virtual agent may oversee the overall situation for a given meeting and may act as a controlling instance across other POJ application elements. It may compare current aggregated POJ values which are stored in the user status element, with configured minimum POJ values which are available in the meeting policies element. In addition, it may handle multiple meetings. The virtual agent may further have access to the calendar component to get meeting data. It may further instruct the data collection element to start, stop or set frequencies of data collections. In addition, it may instruct the data output element to update POJ GUIs.
- reminder element may issue reminders to participants triggered by the virtual agent, based on criteria configured in the meeting policies. After having issued reminders to specific user(s), the data collection element may monitor for user's reactions for calculating POJ value updates for these user(s). The reminder element may have interfaces to both, the groupware application (e-mail) and the RTC system (TextChat, voicemail, voice messaging).
- reschedule element: if, in spite of the reminder, the minimum POJ value for the respective user(s) as set in the meeting policies cannot be achieved, the meeting may get rescheduled. All invited users will get informed about the rescheduling by the rescheduling element which is triggered by the virtual agent. The rescheduling element may have interfaces to both, the groupware application and the RTC system.

The calendar application component may be used as a data source for the POJ application. If it has a POJ GUI implemented (e.g. an extension to an MS Outlook Calendar), the users' aggregated POJ values may be indicated to the meeting host's calendar, as shown in Fig. 2.

In the meaning of the present invention, all the text- and voice-based communications, reminders, etc. may be done through the RTC system (except e-mails which are typically handled by the groupware application, such as MS Outlook). For horizontal meeting platforms like OpenScape, MiVoice or MS Teams, these are integrated with the calendar component and with the POJ application. For vertical meeting applications like Mitel's Virtual care Collaboration System (VCCS), the RTC system, the calendar component and the POJ application may form an integrated vertical application, e.g. microservices based.

In Fig. 6, a schematic overview of the data sources according to another embodiment of the present invention is shown. Based on data analytics for different user data sources, the data interpretation element, with the help of ML, may calculate individual POJ values in % for all invited users of the electronic meeting for different individual data sources and the data output element may indicate these POJ values as an aggregated POJ value for each invited user to the meeting host. This gives a better information to the meeting host about expectations of invited users attending the meeting. It also allows him/her to eventually take manual actions, such as pinging or calling or otherwise reminding them about the meeting.

In the meaning of the present invention, one or more data sources as depicted in Fig. 6 may be analyzed to calculate the respective POJ values of the invited users.

From the data source "calendar" the user's manual answer to the invitation may be analyzed, i.e. "accepted", "tentatively accepted", "rejected" or "no answer". There may also be a supplementary text in the answer like "Peter, we count on you on agenda item X" or "Not sure if I can make it" which may get analyzed. Further, the usual working times of the respective user may be analyzed, also considering the time zone. The probability of a user joining a meeting may be reduced if the meeting is outside his/her usual working hours. Also, meeting overbookings, vacation entries, as well as preceding or subsequent meetings may get analyzed and may have an impact on the POJ value.

Another data source is text communication channels. According to the present invention, the analysis may include E-Mail, Messenger, Short Message Service (SMS), Rich Communication Services (RCS), etc. Also text notes the user may provide independent of his/her meeting answer may get analyzed, e.g. the user initially accepted the invitation, but some days later he/she sends a note to the inviting host saying: "Probably, I cannot make it". Further, text notes the user may provide after his/her meeting answer, following a manual or automated meeting reminder may get analyzed. In addition, text notes a user may provide together with his/her meeting answer (see data source "calendar" above) may get analyzed.

Another data source is voice communication channels. Here, received voice data via Voice Calls, Voice Messages or Voicemail left by the invited user(s) to the meeting host may get transcribed and analyzed. For example, the user leaves a voicemail on the host's smartphone saying: "Not sure I can make it".

Also, real-time analytics of previous or subsequent user's meetings may be performed. For example, statements made by an invited user during a previous meeting such as "I have another call following this meeting, but it is more important for me to extend our discussion here and I will probably skip my next meeting participation" may get transcribed and analyzed.

Also, meeting series may get analyzed. In the case of a meeting series, the user's joining patterns from previous meetings in the respective series may get analyzed.

In addition, the subject of the meeting may impact the POJ value of an invited user. If a user has "WebRTC expert" in his/her user profile and if the meeting he/she is invited to is about WebRTC, the POJ value increases.

Further, the POJ value may be impacted by the organization, hierarchy or user relation. For example, if the invitation comes from the company's manager, the POJ value may be higher, and may be reduced if a host invites with whom the invited user does have a bad or no relation. Also, based on how often the inviting and invited users had communications in the past, a POJ may get calculated, including analytics about what and how they interacted via various communication channels including meeting recordings. E.g. a very formal business conversation may indicate that the two users have a professional relationship, a very informal conversation may indicate that the two users are friends or have a good relation. The POJ may be impacted in such a way that the user is more open to join a friend's meeting in contrast to a meeting from a colleague at the company the user may not even have heard of. Thus, the POJ value may be higher for an invitation by a friend and may be reduced if the invitation comes from a colleague the user does not know.

Based on configured roles (manager, developer, doctor, etc.) different expectations regarding a user's availability for a higher or a lower amount of meetings per day may be configured. In addition, the user may edit his/her favorite topics, skills, amount of meeting per day etc. These entries may be used to determine the respective POJ values.

For example, a user may set a maximum of four meetings a day in his/her profile. If he/she gets an invitation for a fifth meeting on that same day, the POJ value for said meeting will be reduced by 20%. This reduction of 20% is calculated by the entry in the user's profile (only four meetings a day), and by machine learning (ML) which may analyze that for the respective user, in case of a fifth meeting on the same day, the probability of said user joining the meeting is reduced by x %.

Also, the user's behavior or pattern may get analyzed. For example, a user may have clicked on a meeting invite link and/or may have already opened a PowerPoint file attached to the invitation and looked at it for about 1 hour. This looks like the invited user already has spent a significant amount of time to prepare for the meeting. This increases the POJ value.

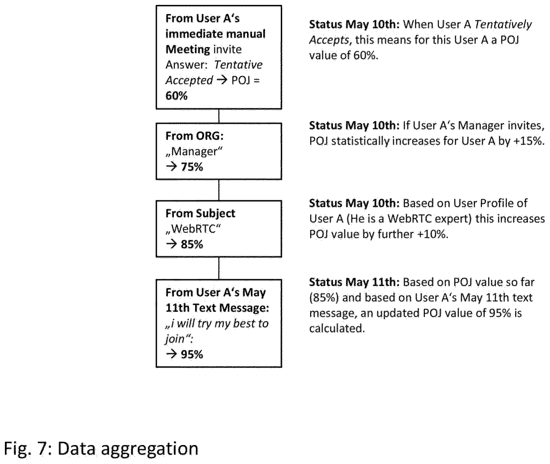

In Fig. 7, a schematic illustration of data aggregation is shown. As already mentioned above, different data sources may get analyzed to calculate the probability of an invited user joining a remote meeting. These calculated POJ values from different data sources may get aggregated to an aggregated POJ value for each invited user, which may be indicated to the meeting host, for example in his/her calendar POJ GUI. From the time of the invitation until the meeting is held, the aggregated POJ values may change for some or all invited users, as new data may be available that may impact the previously calculated POJ value(s). Therefore, the POJ values may get re-calculated, re-aggregated and indicated updated to the host. This may be done continuously or periodically.

The virtual agent may automatically engage with selected users not having reached the minimum POJ value set in the meeting policies or based on other set POJ policies for the given meeting type or a given user, by sending reminders, trying to increase their POJ values. This is done by monitoring and analyzing different data sources of the respective users, received either as responses to reminders or received independent of reminders. Calculated POJ values may being updated and indicated to the meeting host as aggregated POJ values. The POJ application may continue with the increasing actions until preconfigured criteria are met as defined by the policy, e.g. until a minimum average POJ value is reached, until minimum POJ values for given users or user roles are reached and/or until at least a set number of mandatory invited users have accepted the invitation or have the minimum POJ value, set as necessary for a given type of meeting. If the given minimum criteria cannot be reached, the virtual agent may automatically take other actions, such as inviting replacement participants for example based on roles and/or skills of the respective invited user(s) or rescheduling the meeting.

In order to reduce required system resources such as central processing unit (CPU), the data collection element may periodically check the relevant data sources for updated data for recalculation of POJ values, rather than continuously monitoring said data sources.

In case of continuous updates, all data sources of all invited users may permanently be monitored.

In case of periodic updates, the update frequency may increase, the closer the meeting comes. How often the update is performed is configurable as preferred and may be for example:
> 14 days before the meeting: One update per day
8-14 days before the meeting: Update every 4 hours
3-7 days before the meeting: Update every 2 hours
1-2 days before the meeting: Update every hour
At the meeting day: Update every 10 minutes

The starting point for checking one or more data sources for calculation or recalculation of the aggregated POJ values for invited user(s) may be implementation dependent regardless of continuous or periodic update checking. These starting points may for example be as follows:
- Start with the meeting invitation having been sent out by the meeting host.
- Start upon receiving the first response to the invitation (accept, tentatively accept, reject) from an invited user.
- For any invited user or just for invited user(s) not responding to the meeting invitation, start based on time elapsed after the invitation has been sent out or start based on remaining time before the meeting's scheduled time.

The termination points for checking one or more data sources for calculation or recalculation of invited user's aggregated POJ values is implementation dependent (regardless of whether continuous or periodic update checking). These termination points may for example be as follows:
- It ends when the meeting has been started
- It ends when the meeting has ended (as even during the meeting a few users may be still missing)
- It ends for a given invited user upon he/she has joined the meeting. But it continues for other users who have not yet joined the meeting.

In the example given in Fig. 7, a host invites a number of users, including User A, to a remote meeting. The invitation is sent on May 10^{th}. The host is a manager, User A is a member of the host's team. The meeting is going to be about a topic for which User A is an expert.

The immediate answer of User A to the meeting invitation is a "tentative accept". The calculated POJ value based on the analyzation of his/her answer is 60%. Thus, User A has a probability to join the meeting of 60%. The POJ value for User A increases, as his/her manager is the meeting host. Thus, after analyzation of the data sources "answer" and "hierarchy", the aggregated POJ value for User A is now 75%.

Since User A is an expert in the topic of the planned meeting, the aggregated POJ value again increases by 10% to now 85% after analyzation of said data source.

On May 11^{th}, User A sends a text message to the host, stating "I will try my best to join". Analyzation of this communication channel again increases the aggregated POJ value for User A to an aggregated POJ value of 95%.

The calculation of the individual POJ values for User A may be done by continuously monitoring data sources for User A for relevant updates that may contribute to his/her aggregated POJ value for the given meeting, or periodically by increasing the frequency of updates the closer the meeting date comes. Examples for periodic updates have already been given above.

The aggregated POJ value for User A may be indicated to the meeting host's POJ GUI.

In Fig. 7, only the calculation, aggregation and indication of the POJ value(s) for User A is shown. However, the same is true for all other invited users.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- S100 - S900: steps of the inventive method
- Al: Artificial Intelligence
- GUI: Graphical User Interface
- ML: Machine Learning
- NLP: Natural Language Processing
- POJ: Probability Of Joining
- Ul: User Interface
- VCCS: Mitel's Virtual Care Collaboration System for Telehealth E-Consultations
- A/V: Audio/Video
- LM: Language Model
- RTC: Real-Time Communication
- SMS: Short Message Services
- RCS: Rich Communication Services

## Claims

1. A method for indicating the probability of invited users to join a remote meeting,
wherein the method comprises the steps of:
- S100 inviting, by a meeting host, one or more users to a remote meeting;
- S200 reacting, by the invited user(s), to the invitation of the host;
- S300 collecting and analyzing, by a data collection element, one or more data sources;
- S400 calculating, by a data interpretation element, a probability of joining, POJ, value for the one or more data sources;
- S500 aggregating, by a data aggregation element, the POJ value(s) for the one or more data sources of each invited user;
- S600 forwarding, by a data output element, the aggregated POJ values of each invited user to the host;
- S700 checking, by a virtual agent, whether a minimum POJ value is met by the aggregated POJ values;
- S800 reminding, by the host or a reminder element, invited user(s), in case the aggregated POJ value(s) for the respective invited user(s) is/are below a minimum POJ value;
S900 checking, by the virtual agent, whether the minimum POJ value is met by the aggregated POJ values of the reminded users;
- S1000 initiating, by a virtual agent, automated actions, in case the aggregated POJ value(s) of the reminded user(s) is/are still below the minimum POJ value(s) after step S900;
- S1100 ending the method.

2. The method according to claim 1, wherein the invited users react by accepting, tentatively accepting or rejecting the invitation, or by not answering to the invitation.

3. The method according to any one of the preceding claims, wherein the data sources are selected from calendar, text communication channels, voice communication channels, real-time analytics of previous or subsequent user meetings, meeting series, meeting subject, user profile and/or user behavior or pattern.

4. The method according to any one of the preceding claims, wherein steps 400 and 500 are performed continuously or periodically.

5. The method according to claim 4, wherein continuous performing of steps 400 and 500 comprises continuously monitoring, by the data collection element, data sources of the invited user(s) for relevant updates that contribute to his/her aggregated POJ value for the remote meeting.

6. The method according to claim 4, wherein periodic performing of steps 400 and 500 comprises periodic updates which increase the closer the meeting date comes.

7. The method of claim 6, wherein the frequency of updates is configurable.

8. The method according to any one of the preceding claims, wherein the automated actions are selected from reminding user(s), inviting replacement user(s), and/or rescheduling the meeting.

9. The method according to any one of the previous claims, wherein the minimum POJ value is selected from a minimum POJ value for every invited user individually, an average minimum POJ value for all invited users and/or a minimum POJ value for a given meeting type and/or given user roles.

10. A system for indicating the probability of invited users to join a remote meeting, wherein the system is configured to perform the method according to any one of claims 1 to 9.

11. The system according to claim 10, wherein the system comprises a POJ application, a calendar application component, and a RTC system.

12. The system according to claim 11, wherein the POJ application comprises a meeting policies element, a virtual agent, a data collection element, a data aggregation element, a user's status element, a reminder element, a data interpretation element, a data output element, a POJ graphical user interface, GUI, element, and a rescheduler element.

13. The system according to claim 11, wherein the calendar component comprises a POJ GUI element.

14. The system according to claim 11, wherein the RTC system allows for horizontal remote meetings and/or for vertical E-Consultation meeting systems and comprises all communication and collaboration tools.
